# EUROPEAN PATENT APPLICATION

(11) **EP 4 432 168 A1**
(43) Date of publication of application: **18.09.2024**
(21) Application number: 23162413.1
(22) Date of filing: 16.03.2023
(51) Int. Cl.: G06N 3/0475, G06N 3/094

(54) **CONTINUAL LEARNING WITH GENERATIVE AI**

(71) Applicant: Microsoft Technology Licensing LLC, Redmond WA 98052-6399 (US)
(72) Inventor: OKTAY, Ozan, Redmond, 98052-6399 (US); ALVAREZ-VALLE, Javier, Redmond, 98052-6399 (US); LUNGREN, Matthew, Redmond, 98052-6399 (US); OEZ, Mehmet Mert, Redmond, 98052-6399 (US); PÉREZ-GARCIA, Fernando, Redmond, 98052-6399 (US); BRISTOW, Melissa Clare, Redmond, 98052-6399 (US)
(74) Representative: Page White Farrer

(57) **Abstract**

A method comprising: receiving portions of empirical training data each comprising one or more empirical images; training a generator model with an earlier portion of empirical training data and then a later portion of empirical training data, and performing revisionary training of the generator model with synthesized replay data synthesized by the generator model based of the metadata of the earlier portion. After the revisionary training, the method comprises: using the generator model to generate synthesized training data comprising one or more synthesized images based on metadata of at least one of the portions of empirical training data, and training a task-specific model with the synthesized training data. After the training of the task-specific model, the task-specific model is used to generate a prediction relating to the further real-life subject.

## Description

### Background

A condition of a human or animal subject (e.g. patient) is often estimated at least in part based on one or more bodily scans, i.e. images of the subject's body produced using imaging technologies such as x-ray, positron emission tomography (PET), magnetic resonance imaging (MRI), ultrasound or microscopy. For example such scans could be used to diagnose an illness of the subject, such as cancer.

Machine learning is a form of artificial intelligence (Al) which revolves around the training of a statistical model known as a machine-learning (ML) model. A ML model comprises a plurality of parameters which relate the output of the model to its input. The inputs and outputs of the model are typically vectors. The parameters of the model can be tuned based on training data (using either a supervised, reinforcement or unsupervised approach) such that over multiple training data points the model will gradually learn to produce a desired output for a given input. Examples of types of ML model include a neural network, a clustering model, and a decision forest.

Neural networks are perhaps the most common form of ML model. A neural network comprises an interconnected network or mesh of nodes, wherein one or more input nodes receive the input of the model, one or more output nodes provide the output of the model, and in the interior of the network multiple intermediate nodes receive their respective inputs from the input nodes or other intermediate nodes and supply their respective output onward as the input to other interior nodes or the output nodes. The nodes are often arranged in layers in an approach known as deep learning. Whatever form the network takes, the output of each node is a respective function of its inputs, wherein the respective function at each node is parameterized by at least one respective parameter known as a weight (not necessarily a multiplicative weight, though that is certainly one possibility). E.g. the output of a node n in layer m could be equal to θ_{n,m} times a sum of its inputs from multiple nodes in layer m-1, where θ_{n,m} is the weight of node [n, m]. For a given set of training data, there will exist some combination of values for the weights of all the nodes in the network which will cause the network to approximate the desired output on average, and this combination of values of the weights is found through the training process.

It is known to apply machine learning to images of human subjects in the field of medicine. For example a machine learning model may be trained to recognize a certain condition or conditions (e.g. presence of a tumour) from an image of a subject. As another example, a machine learning model may be used to review textual reports on images written by a human practitioner. In this case the model may be trained based on multi-modal data comprising images and accompanying text data, such as prior medical reports describing the images. After a certain amount of training, the model can then be used to review new human-authored reports on new images. I.e. a human practitioner reviews the image or images of the subject (e.g. CT scan, etc.) and writes a report based on their review. The report and the image(s) are then input into the trained model in order to generate suggestions for updates to the report, which the human practitioner can then choose to accept or reject.

### Summary

In the field of machine learning (ML) generally, it is known that when a machine learning model is trained with new training data, it may start to "forget" some of its past training that was based on older training data. For instance, to take a simple example by way of illustration, say an image recognition model is first trained based on a first batch of training data to distinguish between pictures of cats and dogs. Say then that at a later date, the same model is further trained based on a second batch of training data to distinguish between pictures of cows and horses. In tuning the parameters (e.g. weights) of the model toward a solution that is more reliable at distinguishing between cows and horses, this may tune the parameters away from the optimal solution for distinguishing between cats and dogs. In the most extreme examples this may be referred to as "catastrophic forgetting", whereby the model may completely or almost-completely lose the function for which it was originally trained (e.g. distinguishing cats and dogs). This can be problematic if one wishes to create a model having general applicability, e.g. animal recognition in general (to continue the illustrative example).

It is recognized herein that this has potential to be a problem in the field of medicine where a machine learning model may be trained based on multiple different portions or batches of data from subject-groups (e.g. patient groups) with different average demographics (e.g. age or ethnicity) and/or captured with different modalities (e.g. x-ray, MRI, etc). For instance, consider a research institution such as a university or private research company gathering batches of training data from multiple hospitals. If the model is first trained based on one batch of data from one hospital serving one community in one geographic location, and then later the model is trained based on another batch of data from another hospital serving a very different community in a very different geographic location, then the model may forget some of the knowledge it learned from the first community.

To tackle this problem generally in the field of machine learning, it is common to retain "replay" data, i.e. a copy of at least some of the older training data points. At a later time, once the model has been trained with some newer training data, the model is also retrained with the old replay data. This approach is known as continual learning or incremental learning. The re-training with replay data could be referred to as replay training or revisionary training.

However one issue with this is that retaining the replay data incurs storage space. This can be significant for example when the training data comprises images, perhaps from many hundreds, thousands or tens of thousands of past subjects or more. In addition, in the medical field, there is the issue of data security to consider - when the subjects' data is stored for long periods it may be vulnerable to cyber attacks or data leakage. Further, when a ML model is trained with training data of certain subjects, especially outliers, it can be possible to reverse engineer some of their training data from the trained model. Thus even if a downstream customer is provided only with a pre-trained model and not the raw training data, they may still be able to reverse engineer specific data of individual subjects from the trained model. A subject's data can be particularly vulnerable to this when the subject's data or subsequent derivatives has been replayed multiple times during continual learning.

To address such issues, the present disclosure applies the concept of privacy-preserving learning (sometimes also called "differential privacy") to both the initial training data and the replay data. That is, the training data is used to train a generator model which can synthesize output data in the same feature space as the training data (as opposed to a latent space) - i.e. in this case, it is trained based on actual empirical images of real-life subjects, and based thereon learns to generate synthesized images of synthesized subjects. In addition, the training data comprises metadata describing the subjects shown in the training images, e.g. age, gender, medical condition, etc. Based on at least some of the metadata of an old portion of empirical training data, the generator model is used to generate synthesized replay data in the form of one or more synthesized images, which are later used to perform revisionary "replay" training of the generator model alongside or following the training of the generator model with a new portion of empirical training data. In embodiments, revisionary training of the task-specific model may also be performed.

According to one aspect disclosed herein, there is provided computer implemented method comprising: receiving over time a series of portions of empirical training data including at least an earlier portion and a later portion following the earlier portion in the series, each portion in the series comprising one or more empirical images, each empirical image captured empirically from a respective real-life subject; and for each of one or more of the portions of empirical training data in the series including at least the earlier portion, obtaining (e.g. receiving) corresponding metadata describing the real-life subject or subjects captured in the one or more images of the portion of empirical training data. The method comprises: training a generator model with the earlier portion of empirical training data; and after the training of the generator model with the earlier portion of empirical training data, training the generator model with the later portion of empirical training data, and performing revisionary training of the generator model with synthesized replay data synthesized by the generator model based on at least some of the metadata of the earlier portion of empirical training data. After the revisionary training, the method further comprises: using the generator model to generate synthesized training data comprising one or more synthesized images based on at least some of the metadata of at least one of the portions of empirical training data, and training a task-specific model with the synthesized training data. After the training of the task-specific model, an empirically captured image of a further real-life subject is input into the task-specific model, thereby causing the task-specific model to generate a prediction relating to the further real-life subject.

The disclosed method thus applies the building blocks of differential privacy and continual learning to an incoming series or stream of portions of data in order to enhance data security and in embodiments reduce storage requirements. This technique also allows models to stay-up-to-date even if there are trend changes in datasets (e.g. health data and such as covid-19 data). The models continuously stay up-to-date instead of falling behind the trends as in single-training-and-deployment models.

In embodiments all the real-life subjects of all the portions in the series are instances of a same species of human or animal, the one or more synthesized images are one or more synthesized images of said species, and the further real-life subject is also an instance of said species. In this case the prediction may comprise: predicting presence or absence of a medical condition in the further real-life subject and/or a medical treatment to apply to the further real-life subject. However the idea could also be extended to applications relating to other types of natural image. E.g. the subjects could all be members of another species of living being, such as a species of plant or fungus, and the task-specific model could be used to make predictions relating to a further subject of that species. Or the subjects call all be of a same type of object such as a type of industrial article or product, and the task specific model may be trained to make predictions as to the condition of a further instance of this type of object or a treatment to apply to the object.

Each portion of training data may be an individual training data point or a batch of multiple training data points, where each training data point comprises at least one empirical image of a respective subject. Each training data point may also comprise additional empirical data such as a textual report describing the respective image. Each training data point may also comprise respective metadata of the subject shown in the respective image (e.g. their age, gender and/or health condition, etc.). Alternatively the metadata may be provided collectively for a batch of training data points (e.g. the subjects of this batch are all of gender g in age range x-y).

In embodiments the metadata of each portion of empirical metadata may be received along wite the corresponding portions of empirical metadata, from the same source (e.g. same hospital or other such medical institution). Alternatively however the metadata could be generated at the receive side of the computer system performing the method.

In embodiments each portion of empirical training data may comprise a batch of three or more training data points, ten or more training data points, 100 or more training data points, or 1000 training data points. The portions or batches may also comprise different numbers of training data points compared to one another.

In embodiments the portions of training data are received and processed in a streamed manner.

Hence in embodiments the method may comprises: after the training of the generator model with the earlier portion of empirical training data but before training with the later portion of empirical training data, using the generator model to generate an earlier portion of synthesized training data comprising an earlier one or more synthesized images (e.g. of said species) based on the metadata of the earlier portion of empirical training data, and training the task-specific model with the earlier portion of synthesized training data. The training of the generator model with the later portion of empirical training data, and the revisionary training of the generator model with the synthesized replay data, may be performed after the training of the task-specific model with the earlier portion of synthesized training data. The use of the generator model and the training of the task specific model performed after the revisionary training may comprise: using the generator model to generate a later portion of synthesized training data comprising a later one or more synthesized images (e.g. of said species) based on the metadata of the later portion of empirical training data, and training the task-specific model with the later portion of synthesized training data. Said inputting of the further empirical image into the task-specific model may be performed after the training with the later portion of synthesized training data. Preferably the revisionary training of the generator model is performed after, or interleaved with, the training of the generator model with the later portion of empirical training data.

In other words, in embodiments the method may comprise:
receiving over time a series of portions of empirical training data including at least an earlier portion and a later portion following the earlier portion in the series, each portion in the series comprising a) one or more empirical images, each empirical image captured empirically from a respective real-life subject, and b) corresponding metadata describing the real-life subject or subjects of the portion, wherein all the real-life subjects of all the portions in the series are instances of a same species of human or animal; and:
i) training a generator model with the earlier portion of empirical training data;
ii) after the training of the generator model with the earlier portion of empirical training data but before training with the later portion of empirical training data, using the generator model to generate an earlier portion of synthesized training data comprising an earlier one or more synthesized images of said species based on the metadata of the earlier portion of empirical training data, and training a task-specific model with the earlier portion of synthesized training data;
iii) after the training of the task specific model with the earlier portion of synthesized training data, training the generator model with the later portion of empirical training data;
iv) after the training of the task-specific model with the earlier portion of synthesized training data (and in embodiments after, or interleaved with, the training of the generator model with the later portion of empirical training data), performing revisionary training of the generator model with synthesized replay training data synthesized by the generator model based on at least part of the metadata of the earlier portion of empirical training data;
v) after the revisionary training, using the generator model to generate a later portion of synthesized training data comprising a later one or more synthesized images of said species based on the metadata of the later portion of empirical training data, and training the task specific model with the later portion of synthesized training data;
vi) after the training with the later portion of synthesized training data, using the task-specific model to predict presence or absence of a medical condition in a further real-life subject and/or a medical treatment to apply to the further real-life subject, based on an empirically captured image of the further real-life subject.

The series may be an ongoing series in which each of three, more or all of the portions of empirical training data are received at different times than one another.

In embodiments, as each n^{th} portion of empirical training data in the series it is received, it is used to perform a respective n^{th} stage of the training of the generator model, and following that the generator model is used to generate a corresponding n^{th} portion of synthesized training data (comprising one or more synthesized images) which is used to perform a respective n^{th} stage of the training of the task-specific model. Following the receipt of the n^{th} portion of empirical training data, an (n+1)^{th} portion of empirical training data is received, and so forth. The n^{th} stage of training of the generator model and/or task-specific model may be performed before or at least partially in parallel with the receipt of the (n+1)^{th} portion of empirical training data. The revisionary training of the generator model based on the n^{th} of synthesized training data may be performed after or at least partially interleaved with the training of the generator model based on the (n+1)^{th} portion of empirical training data. In embodiments where revisionary training of the task-specific model is performed, the revisionary training of the task-specific model based on the image(s) synthesized from the metadata of the n^{th} portion of empirical training data may be performed after or at least partially interleaved with the training of the task-specific model based on the (n+1)^{th} portion of synthesized training data.

This process may continue over three or more portions of empirical training data; n = 1 to N, where N ≥ 3. In embodiments N ≥ 10. In embodiments N ≥ 100. In embodiments N ≥ 1000.

In embodiments, the earlier portion of empirical training data may be deleted from storage after it has been used to train the generator model. In embodiments each portion of empirical training data may be deleted following its use to train the generator model.

In embodiments, the deletion may comprise deleting from all storage of the party, e.g. institution, operating the computer system upon which the method is performed. In streamed embodiments, the deletion of each n^{th} portion of empirical training data may be performed before or at least partially in parallel with the (n+1)^{th} portion of empirical training data, such that multiple portions are not stored at once.

In embodiments one or more of the portions of empirical training data may be received from a computer system of at least one party external to that which performs the method. In embodiments different ones of the portions of empirical training data may be received from the computer systems of different external parties. E.g. the party performing the method may be a private or public research institution, and the party or parties providing the empirical training data may be one or more external institutions, such as hospitals. The portion(s) of empirical training data received from the external party or parties may be received over a communication network such as the internet.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of the present disclosure and to show how embodiments may be put into effect, reference is made by way of example to the accompanying drawings in which:
Figure 1 is a schematic block diagram of a computing network in accordance with embodiments described herein,
Figure 2 is a schematic illustration of a machine learning model in accordance with embodiments described herein, and
Figure 3 is a flow chart of a method of machine learning in accordance with embodiments described herein.

### Detailed Description of Embodiments

Synthetic data generation as an industry is expected to grow significantly in coming years. Further, synthetic data has a great potential to enhance AI models by increasing the diversity of training data they are trained on, and exposing them to long-tail events (e.g., stress-testing) to ensure the safety of AI in critical applications such as healthcare, as well as reducing the amount of personal data that needs to be securely stored for any length of time. AI companies in medical imaging face significant challenges in getting access to healthcare data due to regulatory restrictions. Regulations and ethics exacerbate the situation and sometimes make it impossible. Public perception about tech companies accessing large cohorts of patient data raises concerns across public opinion. Some healthcare data brokers started selling data but the prices are still unaffordable for large datasets and this data is often uncurated, or labelled inconsistently, and may contain PID (personal identity) anonymisation errors. Buying and selling healthcare data could still have PR or ethical implications for patients and public opinion.

It would be desirable to provide an improved system and method of machine learning which would address one or more of the above issues in the field of healthcare, whether for treatment or diagnostic purposes.

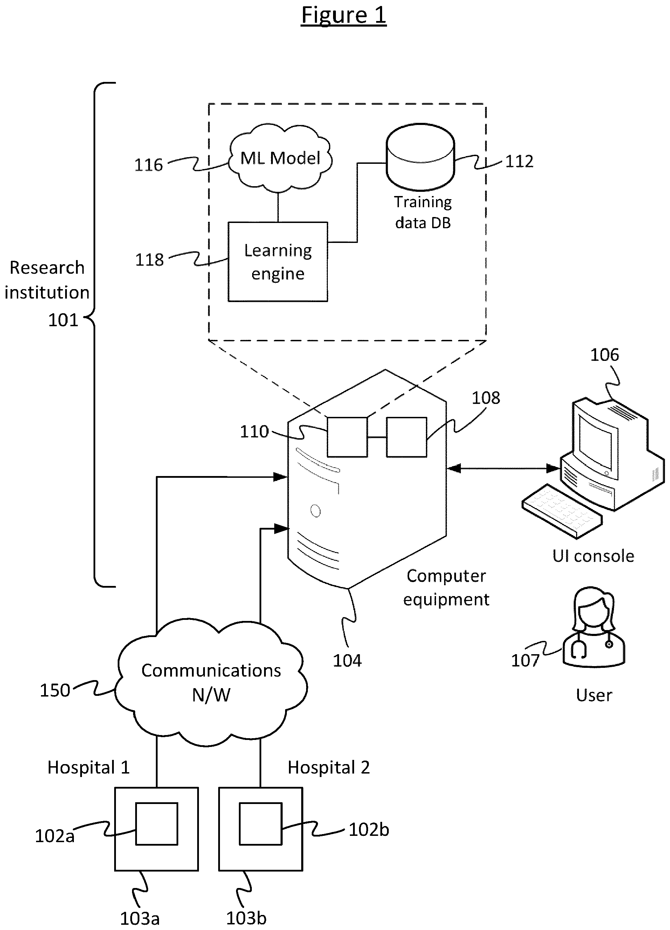

Figure 1 shows an example computing network in accordance with embodiments of the present disclosure. The computing network comprises: at least one image source 102a, 102b; computer equipment 104; and at least one user interface (UI) console 106. The at least one image source 102a, 102b and the UI console 106 are operatively coupled to the computer equipment 104, either directly or via one or more communication networks, such as the Internet, a mobile cellular network, and/or a private wired or wireless intranet of an organization (e.g. hospital, health organization or research institute). It will be appreciated that any data, signals or information described below as being exchanged between the image source(s) 102a, 102b and the computer equipment 104, and between the computer equipment 104 and the UI console 106, may be conducted by any such means of connection and/or others.

In an exemplary use case, the computing equipment 104 and UI console 106 are comprised by a first computing system 101 operated by a first party, e.g. a first institution such as a private or public research institution; and each of the one or more image sources 102a, 102b may be comprised by a respective second computer system 102a, 103b of a respective second party, e.g. a respective second institution such as a hospital. In one such example the first computer system 101 is that of a research institution (e.g. university or private research company) and each of the second computer systems 103a, 103b is that of a respective hospital or other such healthcare institution that supplies training data collected from its subjects (e.g. patients) for use by the research institution. The second computer system(s) 103a, 103b may be coupled to the first computer system 101 by one or more communication networks 150, such as any of the types mentioned above, e.g. the internet, and may be thereby arranged to provide their training data to the computer equipment 104 of the first computer system 101 via the one or more communication networks 150.

Each image source 102a, 102b may comprise at least one scanner for producing scans of at least a bodily part of a human or animal subject, living or dead, based on one or more scanning media types. For example such a scanner 102 may comprise an x-ray based scanner for producing x-ray scans, a PET scanner for producing PET scans, an MRI scanner for producing MRI scans, an ultrasound scanner for producing ultrasound scans, and/or scanning electron microscopy equipment for producing electron microscopy based scans. Another example could be visible light photography equipment for producing images of the subject in the form of photographs. In embodiments the system may comprise multiple types of scanner or other imaging device for producing multiple types of scan or image of a given subject based on different scanning media (e.g. x-ray and MRI, x-ray and PET, PET and MRI, etc.). Alternatively only a single scanner or imaging device employing a single type of imaging medium may be used, e.g. x-ray only, or MRI only, etc. Note also that for a given imaging medium type, there may be different options for producing an image. For example an x-ray based scan as referred to herein could refer to an x-ray photograph or a more sophisticated form of scan based on x-rays as the probing medium, such as a CT (computed tomography) scan. Or a visible light based scan could refer to a simple macroscopic visible light photograph or an optical microscopy based scan.

Thus each image obtained by each image source 102a, 102b takes the form of a bodily scan or other such image of a human or animal body, obtained by an image source 102 in the form of a medical scanner or other such medical imaging equipment. Each such image is an empirical image, in that it has been captured from a real-life subject, being a real-life instance of the species of human or animal in question (as opposed to being an artificially synthesized image). Note also that a reference to an image of a subject doesn't necessarily limit to an image of the entire body of the subject. An image of only a particular body part or parts of a subject could also be described as an image of the subject.

In the case of bodily scans or the like, each image may comprise a 2D image or a 3D image comprising a stack of 2D slices through the subject. In the latter case each slice comprises a cross-section through the subject taken at a different respective depth. For instance, while a simple x-ray photograph may comprise only a single x-ray image, a more sophisticated x-ray technology such as a CT (computed tomography) scan may comprise a stack of images representing slices through the subject at different depths, thus creating a stack of 2D slices representing a 3D volume of at least a portion of the subject's body. The scanning equipment 102 may be used to take a 2D or 3D scan of a given subject on a single occasion or multiple such scans taken on multiple different respective occasions (different times), e.g. spaced apart by hours, days, weeks, months or years.

The computer equipment 104 may comprise a single computer unit in a single housing, or multiple units in separate housings at one or more sites and networked together using any suitable communications network technology. For example the computer equipment 104 may comprise one or more server units. E.g. the computer equipment 104 may comprise multiple server units in the same rack, or different units or racks in the same room, different units or racks in different rooms of the same facility or data centre, and/or different facilities or data centres at different geographic sites. In the case of multiple computer units (e.g. server units), these may for example be networked together via a server area network, local area network, intranet, campus area network, metropolitan area network and/or a wide-area network or internetwork such as a mobile cellular network and/or the internet.

The UI console 106 may be integrated Into one or more of the computer units of the computer equipment 104, and/or may comprise one or more separate computer terminals or dedicated UI peripherals. The UI console 106 comprises at least one display screen, and at least one form of user input means (e.g. a touch screen and/or point-and click interface of the display, and/or a keyboard or voice interface). The UI console is thus able to provide a user interface (Ul) for outputting text or images to a user 107, and receiving text or other inputs from the user 107. The user 107 may comprise for example a medical practitioner, veterinarian, or a researcher. The user 107 may comprise a single such person or a team of two or more people.

The computer equipment 104 comprises processing apparatus 108 comprising one or more processors, and memory 110 comprising one or more memory units. The processor, or each processor, may take any suitable form such as a CPU (central processing unit), or a dedicated AI accelerator processor, or some other, re-purposed form of application-specific processor such as a GPU (graphics processing unit), crypto-processor or DSP (digital signal processor). The memory unit, or each memory unit, may take any suitable form, e.g. an electronic memory medium such as a SSD (solid state drive), flash memory, ROM (read only memory), EEPROM (electrically erasable and programable ROM), RAM (random access memory), SRAM (static RAM), and/or DRAM (dynamic RAM); and/or a magnetic memory such as a hard drive, removable magnetic disk, and/or magnetic tape drive; and/or optical memory such as CD (compact disc), DVD (digital versatile disk), quartz glass storage, and/or magneto-optical drive; and/or synthetic biological storage such as synthetic DNA storage.

In some examples, computer executable instructions are provided using any computer-readable media that are accessible by the computing equipment 104. Computer-readable media include, for example, computer storage media such as memory 110 and communications media. Computer storage media include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media do not include communication media. Therefore, a computer storage medium should not be interpreted to be a propagating signal per se. Propagated signals per se are not examples of computer storage media. Although the computer storage medium (the memory 110) is shown within the computing equipment 104, it will be appreciated by a person skilled in the art, that, in some examples, the storage is distributed or located remotely and accessed via a communication network or other communication link (e.g., using a communication interface).

Whatever form it takes, the memory 110 is arranged to store a training database (DB) 112, a machine learning model 116, and a learning engine 118. The training database 112 stores, at least temporarily, the image data from one or more images received from the at least one image source 102a, 102b. The training database also stores metadata describing one or more parameters of the subjects from which the images were captured, e.g. age, gender, location of birth or residence, or a medical condition. Optionally the training database 112 may also store additional information accompanying one or more of the images from the image source(s) 102a, 102b, e.g. text data describing the image, such as a medical report.

The machine learning (ML) model 116 may comprise one or more neural networks, or any other form of statistical model capable of learning based on training data, such as a clustering model or decision forest. The machine learning (ML) engine 118 comprises software arranged to take one or more images from the training database 112, the associated metadata, and optionally the additional accompanying data such as the textual reports, and input them to the ML model 116 to in order to train the ML model. Once trained, at least to some extent, the ML engine 118 may then input a target image of a target subject into the ML model 116, optionally along with additional data such as metadata of the target subject and/or a textual report on the target image. The ML model 116 can thus be caused to make predictions (also called inferences) based on the target image and optional report data. These predictions may comprise for example an estimate as to the presence or absence of a particular condition (e.g. disease) in a target image of a target subject, or a suggested treatment to apply to the target subject, or one or more suggested updates to a report(s) written by a human author on the target image or subject. The ML engine 118 comprises one or more machine learning algorithms arranged to train the ML model 116 based on past images and optionally associated reports from the image database 112 and optional report database 114 respectively. Alternatively the model may have been trained elsewhere, on other computer equipment (not shown), and copied to the memory 110.

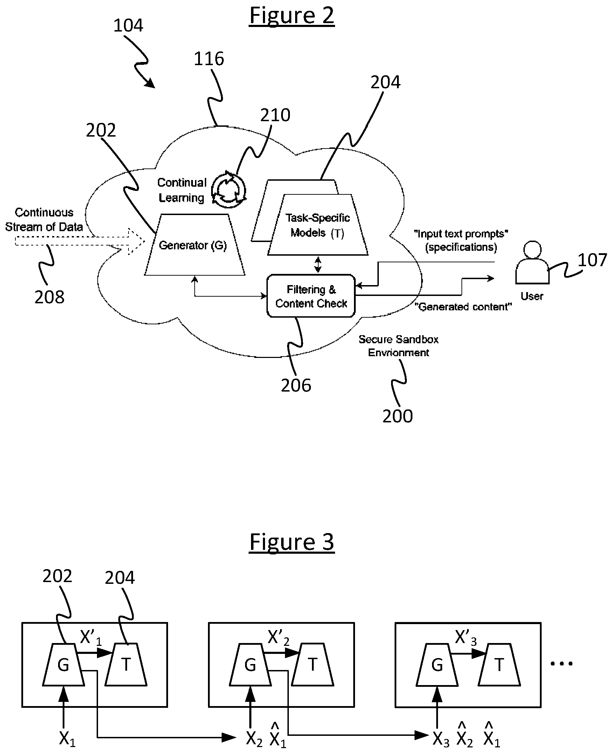

Figure 2 schematically illustrates further detail of the machine learning model 116 and its operation under control of the machine learning engine 118 in accordance with embodiments disclosed herein.

The machine learning (ML) model comprises a plurality of constituent models: a generator model (G) 202 and one or more task-specific models (T) 204. It may also comprise a filtering and content check component 206. Preferably the ML model 116 is implemented in a secure sandbox environment 200 of the computer equipment 104. The training database 112 may also be implemented in the secure sandbox environment 200. Each of the generator model 202 and the task-specific model(s) 204 may comprise a neural network. In embodiments the generator model 202 comprises a diffusion model, but this is not essential.

In operation, the computer equipment 104 of the first computer system 101 receives empirical training data from each of the one or more image sources 102a, 102b (e.g. from the one or more second computer systems 103a, 103b of one or more external institutions such as hospitals). The empirical training data from each source 102a, 102b comprises a plurality of empirical training data points. Each training data point comprises a respective empirical image of a respective subject, the respective subject being a respective instance of a given species of human or animal. The subjects captured in the images of all the empirical training data points (for a given instance of the method) are of the same species. Note again that an image of a subject does not necessarily imply an image of the whole body of the subject, and each image of the respective subject may comprise an image of only a particular body part or parts of the subject. In embodiments each empirical image may comprise an image of a same type of body part of said same species of human or animal (e.g. all the images are of the chest). However in some cases it may also be possible to learn about the same condition from images of different body parts.

Each training data point further comprises metadata of the respective subject, e.g. the age or age range of the subject shown in the respective image, their biological gender, a location of their residence or birth, their ethnicity, an indicator of socioeconomic circumstance, or a known or estimated medical condition of the subject. Alternatively metadata may be provided not for individual data points, but on a batch-by-batch basis for batches of training data points from subjects sharing common metadata properties. E.g. the metadata of a given batch may specific that this batch comprises images of subjects of gender g in age range x-y with estimated condition c.

In further variants, the metadata need not necessarily be received from the sender (source) 102a, 102b of the empirical training data, but could instead be generated at the receive side 101. For example, the metadata for a given portion of empirical training data could comprise a latent representation (i.e. an encoding) of each image in the portion, or of the portion as a whole, generated by an encoder network at the receive side 101. Or the metadata could comprise one or more manual labels describing each image or the portion as a whole added manually by a human labeller at the receive side 101. A mixture of metadata received from the source 102a, 102b and metadata generated at the receive side 101 could also be used. In general the metadata could comprise any data describing the subject or subjects of each image or batch, such as their inherent physical characteristics

(e.g. age or gender), or their circumstances (e.g. their environment or time of capture of the image), or a latent representation.

Each empirical training data point may optionally further comprise additional supporting information relating to the respective image. For example each empirical training data point may comprise text data supplementing the respective image, such as a medical report written by a human practitioner reporting on the image (e.g. a radiologist's report on a CT or MRI scan).

The training data points received from the source(s) 102a are empirical data points comprising empirical images, meaning they are captured in real-life by actual observation of a real-life subject. In other words they are sampled physically (as opposed to being generated virtually in a computer) from a physical subject, such as by the capture of physical particles like photons reflected or emitted from the subject's body to form an image, or otherwise by a person or physical process interacting with the subject in the real-world in one way or another. Hence the empirical training data could also be referred to as real or real-life training data, actual training data, observed training data, natural training data or physical training data points; the empirical training data points could also be referred to as real or real-life training data points, actual training data points, observed training data points, natural training data points or physical training data points; and the empirical images could also be referred to as real or real-life images, actual images, observed images, natural images, sampled images or physical images. The real-life subjects could also be referred to as real subjects, observed subjects, actual subjects, natural subjects or physical subjects. The terminology is intended to contrast against computer-synthesized data.

The empirical training data points are received into the training database 112 from the one or more sources 102a, 102b (e.g. hospitals), where they are held at least temporarily. The machine learning (ML) engine 118 supplies a series 208 of portions of the empirical training data from the database 112 to the generator model 202, where they are used to train the generator model 202. Each portion comprises one or more of the empirical training data points from the database 112. In embodiments each portion may be an individual empirical training data point. Alternatively each portion may comprise a batch of multiple empirical training data points. Note that the term database as used here does not necessarily imply long-term storage, and in embodiments the empirical training data points (except at least some of the metadata) may be deleted from the training database 112 once they have been used to train the generator model 202. Preferably the deletion comprises deleting from all storage of the party (e.g. institution) operating the first computer system 101, including deleting from non-volatile storage. This way the subjects' data is not at risk of being compromised through malicious attacks or data leakage from long-term centralized systematic storage of the first party.

The generator model (G) 202 is trained based on each of the empirical training data points in turn, using known training techniques such as stochastic back propagation. The training is based on at least the image in each empirical training data point, and the corresponding metadata. The training may additionally be based on any supplemental information (e.g. text report) included in each of one, some or all of the empirical training data points.

A generator model is a model which can learn to generate a synthesized version of its input. So the output of a generator model represents at least part of the same real-world feature space as its input (as opposed to, say, taking an input in a real-world feature space and outputting a latent vector as in the case of an encoder network, or taking a latent vector as an input and providing an output in a real-world feature space as in a decoder network). In the present case dealing with images, this means the generator model 202 takes an input vector comprising an empirical image, and outputs a synthesized image. During training the generator model 202 is trained such that the synthesized versions which it outputs are an accurate representation of the input.

After a certain amount of training, the generator model 202 can then be used to generate synthesized images of the same species of human or animal as was shown in the empirical images of the empirical training data. If the empirical training images showed a particular same body part (e.g. an x-ray of the chest) then each synthesized image will comprise a synthesized image of said body part. The generating is done based on one or more input parameters specifying one or more properties of the desired category of subject. For example, a user 107 or an automated process may specify to generate a specified number J (e.g. one hundred) images of a specified body part p of a person (or animal) of specified gender g1 in a specified age range x-y from location q and having a specified medical condition c. Based on the specified values of these parameters the generator model 202 will automatically generate J different examples of the desired body part of the desired species. In doing so, the generator model 202 will apply pseudorandom variations in an internal latent space of the generator mode, such that the J different synthesized images will contain pseudorandom variations relative to one another (even if generated based on the same values of the input parameters).

Following the training of the generator model with at least a first of the portions of empirical training, the ML engine 118 starts to use the generator model 202 to generate a first portion of synthesized training data comprising one or more synthesized training data points. This is done by using the metadata of the first portion of the training data, e.g. the gender, age, location, ethnicity and/or medical condition of the subjects of the first portion of empirical training data, as described above. Each synthesized training data point comprises a synthesized image of the species of subject in question. If images of a particular body part are required, each synthesized image will be an image of a synthesized instance of the body part in question. In some embodiments, each of one, some or all of the synthesized training data points may also comprise supplementary synthesized information, e.g. synthesized text such as a synthesized medical report. The number of synthesized images to generate, and/or a selection of which metadata to use from the relevant portion of empirical training data, could be selected automatically by the ML engine 118 or a component of the model 116, or could be selected manually by the user 107 via the UI console 106.

The first portion of synthesized training data is then input into the task-specific model 204 in order to train the task-specific model 204 to perform the task for which it is intended. E.g. this could be to train the task-specific model 204 to be able recognize the presence or absence of a certain medical condition (e.g. a disease such as cancer) in an image of a target subject, or to propose a treatment to apply to the target subject, or to draft an automated report or suggest amendments to human-authored reports on the target subject. Another example would be to train the task-specific model to segment the target image, such as to draw a line around an object such as an organ or tumour in the target image. In embodiments the synthesized data from the generator model 202 could be used to train a plurality of task-specific models 204 each for a respective task, but for simplicity only one will be described in the following. The task-specific model 204 could be trained for any desired healthcare task of any breadth or scope of application. The generator model 202 and task-specific model 204 could also be called simply the first and second model, or the generator model 202 and downstream model 204 respectively.

Because the task-specific model 204 is trained based on synthesized training data, including synthesized images generated based on the trained generator model 202 and the metadata of the empirical subjects, but not directly based on the empirical training data of the subjects of the empirical training data, then this advantageously protects the data security of the subjects' data.

When a ML is trained directly based on empirical training data, then the model can end up memorizing the subjects' data such that it can be possible to reverse engineer the training data from the trained model. Whereas when a task-specific model is trained based on synthetically generated data, this possibility is mitigated by avoiding training the task-specific model 204 based on subject-specific (e.g. patient-specific) data. This concept is known as "differential privacy". In embodiments the task-specific model 204 may be trained based only on synthesized training data and not any empirical training data. Alternatively the task-specific model 204 could also be trained in part based on the empirical data of one or more consenting subjects (being either different subjects than those whose data is used to train the generator model 202, or a subset of those subjects, or a combination thereof).

The risk that a particular subject's empirical data can be reverse engineered from a trained model is particularly great when the subject is a statistical outlier among the training data. For example of a model is trained directly based on a set of training data that is mostly composed of subjects of a first ethnicity, but contains one subject of a second ethnicity, then that subjects' data is particularly vulnerable to being memorized by the model in a way that enables it to be reverse engineered. To mitigate this further, in embodiments the filtering component 206 is arranged to remove outlier data from the training data used in training. This may comprise one or both of: A) removing outlier training data points from the empirical training data points used to train the generator model 202, and/or B) removing outlier metadata from the metadata used to generate the synthesized training images used to train the task-specific model 204. Thus the task-specific model 204 is trained only based on common features that are common across the training population. This does mean the outlier information will be lost so the generality of the task-specific model 204 will be comprised to some extent, but it is a trade-off between utility and data security.

In embodiments, the training of the task-specific model 204 may optionally also involve target labels labelling the synthesized images, such as class labels or segmentations. The labels could comprise some or all of the metadata used to generate the synthesized images, or could be added manually, or could generated by a separate model that is trained to label the synthesized images. E.g. the distribution of such labels could be learned as part of the incremental learning procedure or alternatively one could perform semi-supervised learning of task-specific models using synthesised images alone.

The training of the generator model 202 continues with a second portion of empirical training data. Following the training of the generator model 202 with the second portion of empirical training data, the ML engine 118 controls the generator model 202 to generate a second portion of synthesized training data based on the metadata of the second portion of empirical training data (e.g. a batch of K synthesized images of body part p of subjects of gender g2 in age range v-w from location r and having absence of condition c). Again the di9fferent images in the bat5ch may contain pseudorandom variations with respect to one another. Then the second portion of synthesized training data is input into the task-specific model 204 in order to further train it for the desired task (e.g. recognizing the presence or absence of condition c). In embodiments the second portion of empirical training data may be received at the computer equipment 104 after the first portion of empirical training data has been deleted.

In addition, the ML engine 117 applies a process of continual learning 210 to the ML model 116. That is, at a later time, after the generator model 202 has been trained with the first portion of empirical training data, the ML engine 118 further trains the generator model 202 with a first portion of synthesized replay data. This may be referred to herein as revisionary training or replay training. In embodiments this may be done after the first portion of empirical data (other than its metadata) has been deleted. The first portion of synthesized replay data comprises one or more synthesized replay data points generated based on the metadata of the first portion of empirical data. Each synthesized replay data point comprises a synthesized image, and optionally synthesized supplementary data, e.g. synthesized text such as a synthesized report. The synthesized replay data points could be the same data points as those in the first portion of synthesized training data used to train the task-specific model 204, or they could be separately generated points, or could comprise one or more of the same and one or more different synthesized data points. This revisionary training of the generator model 202 based on the first portion of synthesized replay data may be performed after the training of the generator model 202 with the second portion of empirical data, or interleaved with the training with the second portion of empirical training data. It may be performed after or in parallel with the training of the task-specific model 204 based on the first portion of synthesized training data.

In some embodiments, in the training of the generator model 202, the new empirical training data points of the second portion of training data are interleaved with the replayed training data points generated based on the metadata of the first portion, and the order of the interleaving of the individual empirical and synthesized data points is randomized. Randomization of batch content (synthetic and real data) yields better outcomes in optimisation to avoid systematic bias that might accidentally be introduced.

Because the replay data is synthesized, this advantageously reduces storage requirements in the training database 112 as only the metadata needs to be kept and not past images. It also allows for improved data security since the subjects' empirical data (other than anonymized metadata) does not need to be kept for long periods in order to enable continual learning. In embodiments, the metadata used to generate the first portion of synthesized replay data is only a subset of the metadata from the first portion of empirical data (the metadata of only some of the empirical training data points of the first portion). This further reduces storage requirements and reduces the amount of data that is potential exposed to attack or leakage. A large amount of replay data is not necessarily required anyway since typically it takes less data to revise old knowledge than to learn new knowledge. Also the metadata used to generate the synthesized replay data preferably at least excludes the metadata of any statistical outliers among the empirical training data points.

In embodiments, the ML engine 118 is arranged to supply the series 208 of portions of empirical training data to the generator model 202 in the form of a stream, and the training of the generator model and task-specific 202 model 204 may be performed in a streamed manner, i.e. in an ongoing manner as portions of empirical training data are received from the source(s) 120a, 102b over time.

In other words, as each n^{th} portion of empirical training data in the series 208 it is received, it is used to perform a respective n^{th} stage of the training of the generator model 202, and following that the generator model 202 is used to generate a corresponding n^{th} portion of synthesized training data (comprising one or more synthesized images) which is used to perform a respective n^{th} stage of the training of the task-specific model. Following the receipt of the n^{th} portion of empirical training data, an (n+1)^{th} portion of empirical training data is received, and so forth. The n^{th} stage of training of the generator model and/or task-specific model may be performed before or at least partially in parallel with the receipt of the (n+1)^{th} portion of empirical training data. The revisionary training of the generator model based on the n^{th} of synthesized training data may be performed after or at least partially interleaved with the training of the generator model based on the (n+1)^{th} portion of empirical training data. In embodiments where revisionary training of the task-specific model is performed, the revisionary training of the task-specific model based on the image(s) synthesized from the metadata of the n^{th} portion of empirical training data may be performed after or at least partially interleaved with the training of the task-specific model based on the (n+1)^{th} portion of synthesized training data.

The process may continue over several stages n = 1... N, where N may be greater than or equal to three, greater than or equal to ten, greater than or equal to one hundred, or greater than or equal to one thousand.

As mentioned, the synthesized images of the portions of synthesized training data comprise pseudo-randomly generated features generated based on applying a pseudorandom variations in the latent space of the generator model 202. Therefore among the synthesized images of any given batch, the synthesized images will contain pseudo random variations relative to one another. I.e. any one, more or all of the following may apply:
- the one or more earlier synthesized images of an earlier portion of synthesized training data may be a plurality of synthesized images comprising pseudo-randomly generated variations relative to one another; and/or
- the one or more later synthesized images of a later portion of synthesized training data may be a plurality of synthesized images comprising pseudo-randomly generated variations relative to one another; and/or
- the one or more synthesized images in a portion of synthesized replay data may be a plurality of synthesized images comprising pseudo-randomly generated variations relative to one another.

As mentioned, the storage of each n^{th} portion of empirical data in the training database may be temporary. In embodiments each n^{th} portion of empirical training data may be deleted before the receipt of the (n+1)^{th} portion of empirical training data, or before the use of the (n+1)^{th} portion of empirical training data to train the generator model 202, or before the use of the (n+1)^{th} portion of synthesized training to train the task-specific model 204 (save only that the metadata of the n^{th} portion of empirical training data needs to be kept at least long enough to be used to generate the n^{th} portion of synthesized replay data). Deleting from storage for the present purposes means deleting from all storage of the computer system 101 implementing the method, and all storage of the party operating that computer system, including deleting from non-volatile storage.

The disclosed method is illustrated schematically in Figure 3. In a first stage, the computer equipment 104 receives a first portion (e.g. batch) of empirical training data X₁ into the training database 112. The first portion of empirical training data X₁ is then used to train the generator model 202 (G). Then metadata from the first portion of empirical training data X₁ is used to control the generator model 202 to generate a first portion (e.g. batch) X'₁ of synthesized training data. The metadata used for this may be only a subset of the metadata from the first portion of empirical training data X₁, preferably excluding at least outliers. The first portion of synthesized training data X'₁ is then used to train the task-specific model 204 (T).

In a second stage, the computer equipment 104 receives a second portion (e.g. batch) of empirical training data X₂ into the training database 112. The second portion of empirical training data X₂ is then used further to train the generator model 202 (G). Then metadata from the second portion of empirical training data X₂ is used to control the generator model 202 to generate a second portion (e.g. batch) X'₂ of synthesized training data. The metadata used for this may be only a subset of the metadata from the second portion of empirical training data X₂, preferably excluding at least outliers. The second portion of synthesized training data X'₂ is then used to further train the task-specific model 204 (T).

Following the training of the generator model 202 (G) with the second portion of empirical training data X₂, or at least in parallel or partially in parallel with this training, in the second stage the generator model 202 also undergoes revisionary training with a first portion *X̂*₁ of synthesized repay data comprising one or more synthesized training data points (each comprising a synthesized image). The first potion of synthesized training data *X̂*₁ is generated by the generator model 202 based on at least some of the metadata from the first portion of empirical training data X₁. Preferably the first portion of the synthesized replay data *X̂*₁ is generated only based on a subset of the metadata from the first portion of empirical training data X₁, as it typically takes less work to revise an old skill than to learn a new skill, and this saves on the amount of metadata that needs to be stored. The subset of metadata used to generate the synthesized replay data also preferably excludes outliers.

The first portion of synthesized replay data *X̂*₁ may be generated at the first stage or the second stage. It may be the same as the first portion of synthesized training data X₁', or comprise a subset of it, and need not be generated separately (i.e. *X̂*₁ and X'₁ may be the same set or one may comprise a subset of the other). Alternatively the first portion of synthesized replay data *X̂*₁ may be generated separately than the first portion of synthesized training data X₁', and may be generated based on a different selection of the metadata from the first portion of empirical training data X₁ than is used to generate the first portion of synthesized training data X₁'. Or the synthesized replay data *X̂*₁ and synthesized training data X₁' may comprise some of the same data points and some different points. I.e. the replayed data could comprise one or more of the same synthesized data points as used to train the task-specific model 204, or could comprise one or more separately synthesized data points, or a combination.

In a third stage, the computer equipment 104 receives a third portion (e.g. batch) of empirical training data X₃ into the training database 112. The third portion of empirical training data X₃ is then used further to train the generator model 202 (G). Then metadata from the third portion of empirical training data X₃ is used to control the generator model 202 to generate a third portion (e.g. batch) X'₃ of synthesized training data. The metadata used for this may be only a subset of the metadata from the third portion of empirical training data X₃, preferably excluding at least outliers. The third portion of synthesized training data X'₃ is then used to further train the task-specific model 204 (T).

Following the training of the generator model 202 (G) with the third portion of empirical training data X₃, or at least in interleaved or partially in interleaved with this training, in the third stage the generator model 202 also undergoes revisionary training with a second portion *X̂*₂ of synthesized repay data. The revisionary training at this stage may also include further revisionary training based on the first portion of synthesized training data *X̂*₁. The second potion of synthesized training data *X̂*₂ is generated by the generator model 202 based on at least some of the metadata from the second portion of empirical training data X₂. Preferably the second portion of the synthesized replay data *X̂*₂ is generated only based on a subset of the metadata from the second portion of empirical training data X₂, and preferably excludes outliers.

In embodiments the training with the empirical data points from the current portion of empirical training data X₃ (or more generally Xₙ) and the revisionary training with the synthesized data-points training synthesized based on the information (e.g. metadata) relating to the preceding portions of empirical training data X₂, X₁ (or more generally Xₙ₋₁, Xₙ₋₁, ...) may be interleaved with one another in a pseudorandom order. As mentioned, randomization of synthetic and real batch content yields better outcomes in terms of avoiding accidental systematic bias.

The second portion of synthesized replay data *X̂*₂ may be generated at the second stage or the third stage. It may be the same as the second portion of synthesized training data X₂', or comprise a subset of it, and need not be generated separately (*X̂*₂ and X'₂ may be the same set or one may comprise a subset of the other). Alternatively the second portion of synthesized replay data *X̂*₂ may be generated separately from the second portion of synthesized training data X₂', and may be generated based on a different selection of the metadata from the second portion of empirical training data X₂ than is used to generate the second portion of synthesized training data X₂'. Or the synthesized replay data *X̂*₂ and synthesized training data X₂' may comprise some of the same data points and some different points.

The process may continue in an analogous fashion over several more stages, each time performing further training of the generator model 202 and task-specific model 204 based on a new incoming portion Xₙ of empirical training data from one of the sources 102a, 102b.

After a suitable period of training of the generator model 202 and task-specific model 204 based on two or more of the portions in the stream or series 208, the task-specific model 204 may be deployed for use to make predictions. That is, a target image of a target subject may be input into the task-specific model 204, where the target image is another empirical image of an actual real-life instance of the same species of human or animal as captured or represented in the images that the models 202, 204 were trained on. The task-specific model 204 is thus caused to output a prediction based on the target image. Depending on the task the model 204 was trained for, this could comprise one or more of several possibilities. For example, the prediction may comprise estimating the presence or absence (or degree) of a condition (e.g. disease) of the target subject based on the target image. And/or, the prediction may comprise segmenting the image, i.e. estimating a boundary around one or more objects such as an organ or tumour. And/or, the prediction may comprise predicting a possible treatment to apply to the target subject. The method may comprise actioning the predicted treatment.

An example use case and implementation are now described.

In embodiments of the disclosed setup, anonymized medical scans and reports are continuously streamed from hospital PACS 103a, 103b to a secure sandbox environment 200, e.g. hosted on a cloud service. For instance every week a new batch of image-report pairs may be transferred over to the database 112 environment. Due to legal agreements and sensitive nature of healthcare data (e.g., privacy), images are not allowed to be stored for more than a fixed period of time (e.g., 1 week). Further, storing a large number of DICOM or pathology slides in the cloud would incur substantial storage cost in the long-run as it's not a scalable solution.

On the flip side, it would be desirable to gain insights (e.g., imaging features, reporting style, etc.) from such stream of data and utilize it to improve healthcare AI models to ensure patient's safety. This objective needs to be achieved without storing the data and compromising patient's privacy. In detail, there are various factors present in medical images which could reveal the identity of a patient, such as: dental fillings, neckless with a name, support device identifiers, and text annotations on images. To achieve this goal, there is disclosed herein a solution that distils related data content from the stream and incorporates that it into a separate artificial neural network (ANN) in a continual learning setting. The approach builds on top of two particular sub-domains of machine learning: (I) incremental-learning and (II) deep-learning with differential privacy.

Figure 2 shows an implementation of the disclosed generative healthcare AI pipeline. The generator and task-specific models 202, 204 are placed in a secure sandbox environment 200 which is isolated from users. The models are continuously updated in a privacy-preserving manner with a stream of data connected to healthcare centers. Incoming data is not stored in the environment but distilled into a generator model. At deployment time, users can query models with text-prompts to retrieve generated content whilst protecting patient's privacy

Figure 3 shows the protocol for training artificial neural networks in an incremental manner with generative replay, where batches of data become available incrementally. Instead of re-initializing the parameters of the network at each time step (or batch), the trained weights are propagated from earlier steps. This way the task-specific model (T) 204 can preserve its past knowledge by re-visiting few examples generated by the generator (G) 202 instead of reproducing a full set of past examples

Incremental learning is a method of machine learning in which input data is continuously used to extend the existing model's knowledge i.e. to further train the mode. It can be applied when training data becomes available gradually over time or its size is out of system memory limits. The model can continuously (I) learn to improve when the system is running; (II) It can adapt to changes of the target concept; (III) It requires less computation and storage resources than learning from scratch. New training examples are provided after a learning system is trained. For example, a disease diagnosis system can gradually improve its accuracy by incorporating medical scans acquired from new cohorts when they use it without reconfiguring and/or retraining the entire system.

Figure 3 illustrates how the generative (G) and task-specific models (T) are incrementally trained over time as new batches of medical data become available. At any given time point (*tᵢ*), data points from past time steps (*t*₁..*t*_{*i-*1}) are replayed by sampling examples from the generative model (G) so that the updated models do not forget about the past knowledge. The replayed samples in combination with new incoming data are used to update all the models placed in a secure sandbox environment. It's important to note that we are not required to reconstruct all past observations but sample only few examples as the models are not learning from scratch. This way the model avoids "catastrophic forgetting". This approach is often viewed in analogous to how memory is consolidated in human brain (hippocampus) through its replays to brain cortex. The generator model samples few examples to play the memory of data seen in the past. The combination of new and replayed examples are later used to update the main neural network model(s).

The replay mechanism can be beneficial to generalize to previously unseen patient demographics, changes in the data acquisition systems or disease types without forgetting about past observations. Similarly, it can balance the attention placed by the model on different patient groups. From this perspective, our approach is classified as domain- and example-incremental generative learning.

Distillation of past observations into a parametric model, such as a neural network, avoids the need to store large quantities of multi-modal data where there could be redundancies and shared features across data points (e.g., multiple images acquired from a patient with mild pneumonia and consolidation on the same day). Furthermore, the disclosed approach can be generalized to other healthcare data modalities different than imaging. Lastly, the generator model can be implemented in a multi-modal fashion; as such, it can learn to synthesize medical scans and their corresponding reports at the same time. Similarly, if there are image annotations (e.g., dense segmentation labels), then they can be perpetuated over time by distilling the knowledge into a parameterized model. As a side note, one can view a "GPT3.5" model as a compact representation of text content available on the internet, which is stored in 175B parameters only (^{~}800GB of memory).

The generator model can be implemented as a generative adversarial network (GAN), diffusion probabilistic model, or any other type of deep learning architecture. In the presented framework, we favor diffusion models (DM) as they are less susceptible to mode collapse and they can better capture the diversity of data they are trained on. These attributes are relevant in the replay stage of incremental learning since we want to capture the distribution of observations seen in the past. Additionally, diffusion models can be conditioned on input text and other forms of user input. If an organization serves these generative models (G) via the cloud as a cognitive service to democratize medical imaging Al, then users would have the option to specify the type of image they are interested in by providing input text prompts. Similarly, the incremental learning process can take into account both medical images and their associated clinical notes.

Healthcare data is sensitive and requires a responsible approach to ensure patient's privacy and safety. With this in mind, embodiments may follow a set of requirements on the generative model and its training procedure:
- The generator and its derived models will be kept in a secure sandbox environment and will not be accessible by its users; as such, users will not be allowed to reverse-engineer the models to reconstruct high-fidelity images used for the model training. For instance, reconstructed images showing the absence of a breast can be indicative of a prior history of breast cancer.
- Population or group level statistics and metadata will neither be stored nor utilized in the training process. This way the models will not release certain characteristics about group of individuals to third-party users (e.g., medical insurance companies). Additionally, the text data used at training time will pre-processed prior to model training to remove such related information.
- There are two main requirements on generated outputs of the model: (I) Training data on which it's trained on should not be directly copied and served to users as output, and (II) generated content (output) should not reveal the identity of patient and shall not be linkable to any sensitive information visible in imaging data. For instance, recent work shows that face reconstructions from volumetric MR scans can unveil patients' identity.

To handle the corner-cases identified in the last bullet, a post-processing step may be applied to model outputs before presenting them to end user, such as removing the head from the generated full-body MR scans. This can be facilitated by deploying a separate image segmentation model. Most importantly, the proposed approach leverages "differential-privacy preserving" learning techniques to minimize potential memorization of training samples with unique characteristics (e.g., rare diseases or support devices).

Differential privacy (DP) is the attribute of an algorithm to be approximately invariant to the inclusion or exclusion of individual patients, providing them with formal and quantifiable privacy guarantees. DP is typically achieved through computationally secure means, that is, an addition of carefully calibrated noise to the training process, making individual contributions indistinguishable from each other.

As mentioned previously, generative models may overfit to training data directly, i.e., generating outputs indistinguishable from the data they have been trained on. For this reason, the proposed approach leverages "differentially private stochastic gradient descent" (DP-SGD) as an optimization technique during its training process. In simple terms, it preserves privacy in a quantifiable manner by clipping and noising the parameter gradients during training. However, it comes with the trade-off between preserved differential privacy and data fidelity also known as utility. Nevertheless, recent work on differentially private diffusion models (DPDM), shows that classifiers trained on DPDM-generated synthetic data perform on par with classifiers trained with synthetic data from standard diffusion models, which has not been demonstrated before for DP generative models.

Overall, the full pipeline involves incremental learning of diffusion models coupled with a differential-privacy preserving training objective. The resultant generator model may be to be hosted in a secure and isolated environment, where its outputs will be monitored through a set of filters as a safety net to avoid any potential leakage of patient information.

It will be appreciated that the above embodiments have been disclosed by way of example only.

For instance, while the above has been described in terms of medical applications, the disclosed techniques could be extended to any type of application that learns to analyse natural images. For example in embodiments the subjects of all the portions of training data may all be of a same species of living being, where that species is not limited to being a human or animal species, and could instead be a species of plant, fungus, bacteria or virus. The task-specific model may be used to make a prediction relating to a further real-life subject being any such species based upon which the generator model was trained. E.g. the task-specific model may predict a condition (such as a disease) based on an empirical image of the further subject of the species in question, or predict a treatment to apply to the further real-life subject. In another example, the subjects of all the portions of training data may all be of a same type of object, such as a type of industrial article or product. E.g. the type of object could be a type of industrial machinery used in an industrial process, or a model of a product such as a vehicle or other consumer product (such as a device or substance) resulting from a production line. In such cases the task-specific model may be used to make a prediction as to the condition of a further real-life instance of the type of object, or a treatment to apply to the further instance of the object, e.g. an adjustment to the industrial process which produces the type of object including the further instance thereof.

The metadata of such beings or objects may comprise any relevant metadata, such as a sub-type of the object or subspecies of the being, an environmental condition of the being or object, and/or a date of acquisition of the image of the being or object.

More generally, according to one aspect disclosed herein there is provided a computer implemented method comprising: receiving over time a series of portions of empirical training data including at least an earlier portion and a later portion following the earlier portion in the series, each portion in the series comprising one or more empirical images, each empirical image captured empirically from a respective real-life subject; for each of one or more of the portions of empirical training data in the series including at least the earlier portion, obtaining corresponding metadata describing the real-life subject or subjects captured in the one or more images of the portion of empirical training data; training a generator model with the earlier portion of empirical training data; after the training of the generator model with the earlier portion of empirical training data, training the generator model with the later portion of empirical training data, and performing revisionary training of the generator model with synthesized replay data synthesized by the generator model based on at least some of the metadata of the earlier portion of empirical training data; after the revisionary training, using the generator model to generate synthesized training data comprising one or more synthesized images based on at least some of the metadata of at least one of the portions of empirical training data, and training a task-specific model with the synthesized training data; and after the training of the task-specific model, inputting an empirically captured image of a further real-life subject into the task-specific model, thereby causing the task-specific model to generate a prediction relating to the further real-life subject.

In embodiments, the generator model may comprises a diffusion model.

In embodiments, the method may comprise: after the training of the generator model with the earlier portion of empirical training data but before training with the later portion of empirical training data, using the generator model to generate an earlier portion of synthesized training data comprising an earlier one or more synthesized images based on the metadata of the earlier portion of empirical training data, and training the task-specific model with the earlier portion of synthesized training data; wherein the training of the generator model with the later portion of empirical training data, and the revisionary training of the generator model with the synthesized replay data, may be performed after the training of the task-specific model with the earlier portion of synthesized training data; the use of the generator model and the training of the task specific model performed after the revisionary training may comprise: using the generator model to generate a later portion of synthesized training data comprising a later one or more synthesized images based on the metadata of the later portion of empirical training data, and training the task-specific model with the later portion of synthesized training data; and said inputting of the further empirical image into the task-specific model may be performed after the training with the later portion of synthesized training data.

In embodiments the revisionary training of the generator model may be performed after, or interleaved with, the training of the generator model with the later portion of empirical training data.

In embodiments the method may comprise: generating at least one further synthesized replay image from the generator model following the revisionary training, and using the at least one further synthesized replay image to further train the task-specific model, wherein said inputting of the further empirical image into the task-specific model is performed after the further training of the task-specific model.

In embodiments, the method may comprise deleting the one or more empirical images of at least the earlier portion of empirical training from storage following being used to train the generator model.

In embodiments, the one or more empirical images from the earlier portion of empirical training data may be deleted from the storage before the later portion of empirical training data is received.

In embodiments, the method may be implemented on a first computer system operated by a first party, and the earlier and later portions of empirical training data in said series may be received from a different second computer systems operated by different respective second parties.

In embodiments, the earlier portion of empirical training data may further comprise a textual report describing at least one or more of the empirical images of the earlier portion of empirical training data, and the training of the generator model with the earlier portion of empirical training data may be further based on the textual report of the earlier portion of empirical training data.

In embodiments, the later portion of empirical training data may further comprises a textual report describing at least one or more of the empirical images of the later portion of empirical training data, and the training of the generator model with the later portion of empirical training data may be further based on the textual report of the later portion of empirical training data.

In embodiments, all the real-life subjects of all the portions in the series may be instances of a same species of human or animal, the one or more synthesized images may be one or more synthesized images of said species, and the further real-life subject may be also an instance of said species; wherein said prediction may comprise: predicting presence or absence of a medical condition in the further real-life subject and/or a medical treatment to apply to the further real-life subject.

In embodiments, the obtaining of the metadata relating to each portion of empirical training data may comprise receiving the corresponding metadata along with the portion.

In embodiments, the respective metadata of each respective real-life subject may comprise at least one of: an age or age range of the respective subject; a gender of the respective subject; a location of birth or residence of the respective subject; a type of body part shown in the image of the respective subject; a known or estimated health condition of the respective subject; an environmental condition of the respective subject; a date of acquisition of the image of the respective subject; or a latent representation of the respective subject.

In embodiments, the one or more empirical images of the earlier portion of training data may be a plurality of empirical images, and the metadata of the earlier portion of empirical training data may comprise respective metadata describing the respective subject of each the plurality of empirical images in the earlier portion of empirical training data; and the metadata based upon which the synthesized replay data is generated may comprise the metadata of only a subset of the subjects of said plurality of empirical images in the earlier portion of empirical training data.

In embodiments, the one or more empirical images in the earlier portion of training data may be a plurality of empirical images, and the metadata upon which the generating of the earlier portion of synthesized training data is based may exclude metadata of at least one outlier among the subjects of the earlier portion of empirical training data.

In embodiments, the one or more empirical images in the later portion of training data may be a plurality of empirical images, and the metadata upon which the generating of the later portion of synthesized training data is based may exclude metadata of at least one outlier among the subjects of the later portion of empirical training data.

In embodiments, the metadata used to generate the synthesized replay data may exclude metadata of at least one outlier among the subjects of the earlier portion of empirical training data.

According to another aspect disclosed herein, there is provided a computer program embodied on non-transitory computer-readable storage and configured so as when run on a computer system to perform the method of any embodiment disclosed herein.

According to another aspect there is provided a computer system comprising: processing apparatus comprising one or more processors, and memory comprising one or more memory units, wherein the memory stores code arranged to run on the processing apparatus, the code being configured so as when run on the processing apparatus to perform the method of any embodiment disclosed herein.

Other variants or use cases may become apparent to a person skilled in the art once given the disclosure herein. The scope of the present disclosure is not limited by the above-described embodiments, but only by the accompanying claims.

## Claims

1. A computer implemented method comprising:
receiving over time a series of portions of empirical training data including at least an earlier portion and a later portion following the earlier portion in the series, each portion in the series comprising one or more empirical images, each empirical image captured empirically from a respective real-life subject;
for each of one or more of the portions of empirical training data in the series including at least the earlier portion, obtaining corresponding metadata describing the real-life subject or subjects captured in the one or more images of the portion of empirical training data;
training a generator model with the earlier portion of empirical training data;
after the training of the generator model with the earlier portion of empirical training data, training the generator model with the later portion of empirical training data, and performing revisionary training of the generator model with synthesized replay data synthesized by the generator model based on at least some of the metadata of the earlier portion of empirical training data;
after the revisionary training, using the generator model to generate synthesized training data comprising one or more synthesized images based on at least some of the metadata of at least one of the portions of empirical training data, and training a task-specific model with the synthesized training data; and
after the training of the task-specific model, inputting an empirically captured image of a further real-life subject into the task-specific model, thereby causing the task-specific model to generate a prediction relating to the further real-life subject.

2. The method of claim 1, wherein the generator model comprises a diffusion model.

3. The method of claim 1 or 2, wherein:
the method comprises: after the training of the generator model with the earlier portion of empirical training data but before training with the later portion of empirical training data, using the generator model to generate an earlier portion of synthesized training data comprising an earlier one or more synthesized images based on the metadata of the earlier portion of empirical training data, and training the task-specific model with the earlier portion of synthesized training data;
the training of the generator model with the later portion of empirical training data, and the revisionary training of the generator model with the synthesized replay data, are performed after the training of the task-specific model with the earlier portion of synthesized training data;
the use of the generator model and the training of the task specific model performed after the revisionary training comprises: using the generator model to generate a later portion of synthesized training data comprising a later one or more synthesized images based on the metadata of the later portion of empirical training data, and training the task-specific model with the later portion of synthesized training data; and
said inputting of the further empirical image into the task-specific model is performed after the training with the later portion of synthesized training data.

4. The method of any preceding claim, wherein: the revisionary training of the generator model is performed after, or interleaved with, the training of the generator model with the later portion of empirical training data.

5. The method of any preceding claim, wherein the method comprises:
generating at least one further synthesized replay image from the generator model following the revisionary training, and using the at least one further synthesized replay image to further train the task-specific model, wherein said inputting of the further empirical image into the task-specific model is performed after the further training of the task-specific model.

6. The method of any preceding claim, comprising deleting the one or more empirical images of at least the earlier portion of empirical training from storage following being used to train the generator model.

7. The method of claim 6, wherein the one or more empirical images from the earlier portion of empirical training data are deleted from the storage before the later portion of empirical training data is received.

8. The method of any preceding claim, wherein the method is implemented on a first computer system operated by a first party, and the earlier and later portions of empirical training data in said series are received from a different second computer systems operated by different respective second parties.

9. The method of any preceding claim, wherein one or both of:
the earlier portion of empirical training data further comprises a textual report describing at least one or more of the empirical images of the earlier portion of empirical training data, and the training of the generator model with the earlier portion of empirical training data is further based on the textual report of the earlier portion of empirical training data; or
the later portion of empirical training data further comprises a textual report describing at least one or more of the empirical images of the later portion of empirical training data, and the training of the generator model with the later portion of empirical training data is further based on the textual report of the later portion of empirical training data.

10. The method of any preceding claim, wherein all the real-life subjects of all the portions in the series are instances of a same species of human or animal, the one or more synthesized images are one or more synthesized images of said species, and the further real-life subject is also an instance of said species; wherein said prediction comprises:
predicting presence or absence of a medical condition in the further real-life subject and/or a medical treatment to apply to the further real-life subject.

11. The method of any preceding claim, wherein the obtaining of the metadata relating to each portion of empirical training data comprises receiving the corresponding metadata along with the portion.

12. The method of any preceding claim, wherein the respective metadata of each respective real-life subject comprises at least one of:
an age or age range of the respective subject;
a gender of the respective subject;
a location of birth or residence of the respective subject;
a type of body part shown in the image of the respective subject;
a known or estimated health condition of the respective subject;
an environmental condition of the respective subject;
a date of acquisition of the image of the respective subject; or
a latent representation of the respective subject.

13. The method of any preceding claim, wherein:
the one or more empirical images of the earlier portion of training data are a plurality of empirical images, and the metadata of the earlier portion of empirical training data comprises respective metadata describing the respective subject of each the plurality of empirical images in the earlier portion of empirical training data; and
the metadata based upon which the synthesized replay data is generated comprises the metadata of only a subset of the subjects of said plurality of empirical images in the earlier portion of empirical training data.

14. The method of any preceding claim, wherein either or both of:
the one or more empirical images in the earlier portion of training data are a plurality of empirical images, and the metadata upon which the generating of the earlier portion of synthesized training data is based excludes metadata of at least one outlier among the subjects of the earlier portion of empirical training data; or
the one or more empirical images in the later portion of training data are a plurality of empirical images, and the metadata upon which the generating of the later portion of synthesized training data is based excludes metadata of at least one outlier among the subjects of the later portion of empirical training data.

15. The method of any preceding claim, wherein:
the metadata used to generate the synthesized replay data excludes metadata of at least one outlier among the subjects of the earlier portion of empirical training data.

16. A computer program embodied on non-transitory computer-readable storage and configured so as when run on a computer system to perform the method of any preceding claim.

17. A computer system comprising:
processing apparatus comprising one or more processors, and
memory comprising one or more memory units, wherein the memory stores code arranged to run on the processing apparatus, the code being configured so as when run on the processing apparatus to perform the method of any of claims 1 to 15.
